(19) Europäisches Patentamt
European Patent Office
Office européen des brevets

(11) **EP 3 711 155 B1**

(12) **FASCICULE DE BREVET EUROPEEN**

(45) Date de publication et mention
de la délivrance du brevet:
**13.04.2022 Bulletin 2022/15**

(21) Numéro de dépôt: **18800086.3**

(22) Date de dépôt: **06.11.2018**

(51) Classification Internationale des Brevets (IPC):
***H02P 21/22*** *(2016.01)*

(52) Classification Coopérative des Brevets (CPC):
**H02P 21/22**

(86) Numéro de dépôt international:
**PCT/EP2018/080336**

(87) Numéro de publication internationale:
**WO 2019/096630 (23.05.2019 Gazette 2019/21)**

(54) **PROCÉDÉ DE COMMANDE D'UNE MACHINE ÉLECTRIQUE SYNCHRONE**

VERFAHREN ZUR STEUERUNG EINER ELEKTRISCHEN SYNCHRONMASCHINE

METHOD FOR CONTROLLING A SYNCHRONOUS ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2017 FR 1760768**

(43) Date de publication de la demande:
**23.09.2020 Bulletin 2020/39**

(73) Titulaires:
• **Renault s.a.s**
  **92100 Boulogne Billancourt (FR)**
• **Nissan Motor Co., Ltd.**
  **Yokohama-shi, Kanagawa 221-0023 (JP)**

(72) Inventeur: **KOTEICH, Mohamad**
**91440 Bures sur yvette (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 1 843 462        EP-A1- 1 906 523**
**EP-A2- 1 276 225        WO-A2-2012/126029**
**US-A1- 2004 052 217**

**Description**

L'invention se rapporte au domaine de la commande des machines électriques.

Plus précisément l'invention concerne un procédé de commande d'une machine électrique synchrone à rotor bobiné.

Les machines électriques synchrones sont bien connues dans le domaine automobile, et dans une grande variété d'autres applications industrielles telles que les énergies renouvelables, le transport ferroviaire, etc.

Une machine électrique synchrone comprend une partie fixe appelée stator et une partie mobile appelée rotor. Le stator comprend trois bobines décalées de 120° et alimentées par un courant alternatif.

Le rotor peut comprendre soit une bobine alimentée en courant continu dans le cas des machines synchrones à rotor bobiné (connu sous son abréviation MSRB) soit des aimants permanents (connu sous son abréviation MSAP) entraînés en rotation par le champ électromagnétique produit par les bobinages statoriques.

Le couple électromagnétique fourni par la machine électrique résulte de l'amplitude et de l'orientation des courants par rapport à l'axe du rotor.

Aussi, une consigne de couple peut se traduire en consignes de courants (ou de tension) dans un repère lié au rotor, aussi appelé repère rotorique.

Il est connu dans l'art antérieur de nombreux procédés de commande de machines synchrones, tel que le procédé décrit dans le document FR3012270 du demandeur.

Cependant les procédés connus ne permettent pas de combiner à la fois l'annulation de l'erreur statique, un bon comportement en régime transitoire, une compensation efficace de l'effet de la force contre-électromotrice, tout en s'adaptant en fonction de la saturation en tension, et en compensant les composantes harmoniques sur les courants.

Le document EP1843462 A1 divulgue un procédé de commande d'une machine triphasée synchrone, dans laquelle les tensions de commande sont calculées de manière récursive en fonction de la vitesse rotorique, et sont ensuite limitées en fonction de valeurs de tension minimales et maximales.

Le document EP1276225 A2 divulgue un procédé de commande d'une machine triphasée synchrone dans laquelle on ajoute une tension de compensation des harmoniques de courant à la tension de commande.

Le document EP1906523 A1 divulgue un procédé de commande d'une machine triphasée synchrone comprenant le calcul d'une tension rotorique de compensation de la pulsation de couple, à ajouter à la tension de commande rotorique.

Aussi il existe le besoin d'une commande de machine électrique synchrone adaptable relativement simplement à une MSRB résolvant les problèmes énoncés précédemment.

On propose un procédé de commande d'une machine électrique triphasée synchrone comprenant un stator et un rotor bobiné selon la revendication 1. Ainsi, on peut obtenir une commande de la machine électrique simple, adaptable à tout type de machine synchrone à rotor bobiné et résolvant les problèmes de l'art antérieur énoncés précédemment, notamment une compensation simple des harmoniques de courant.

Avantageusement et de manière non limitative, lesdits courants mesurés sont calculés dans le repère rotorique par une transformée de Park. Ainsi, on peut transformer de manière fiable et rapide les courants mesurés dans un repère rotorique.

Avantageusement et de manière non limitative, le procédé comprend une étape de mesure du courant rotorique ; le calcul des tensions de commande comprenant le calcul d'une tension à appliquer au rotor bobiné. Ainsi, le procédé est simplement adapté pour fonctionner sur une machine à rotor bobiné.

Avantageusement et de manière non limitative, ladite étape de calcul de tensions de commande comprend une initialisation à 0 pour la récursivité. Ainsi l'initialisation des étapes de calcul de tensions de commande est relativement simple.

L'invention concerne aussi un dispositif de commande d'une machine électrique triphasée synchrone comprenant un stator et un rotor bobiné selon la revendication 5.

L'invention concerne aussi un système électrique comprenant une machine électrique synchrone comprenant un stator et un rotor bobiné, une batterie d'accumulateurs électriques pour alimenter ladite machine électrique, un onduleur triphasé apte à transformer la tension continue de la batterie d'accumulateurs électriques en des tensions de commande triphasées pour commander la machine électrique synchrone, et un dispositif de commande tel que décrit précédemment.

L'invention concerne aussi un véhicule automobile comprenant un système électrique tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

-   les figures 1, 2 représentent schématiquement les étapes de calcul des tensions de commande du procédé selon un premier et un deuxième mode de réalisation, pour une machine électrique synchrone à rotor à aimants permanents ; ces étapes sont illustratives et ne font pas l'objet de l'invention revendiquée.

- la figure 3 représente schématiquement une étape supplémentaire à celles des figures 1 et 2 pour le premier mode de réalisation de l'invention de commande d'une machine électrique synchrone à rotor bobiné, objet de l'invention revendiqué.
- la figure 4 est un schéma d'un système électrique selon le premier mode de réalisation de l'invention ;
- la figure 5 est un diagramme des étapes du procédé selon le premier mode de réalisation de l'invention ;

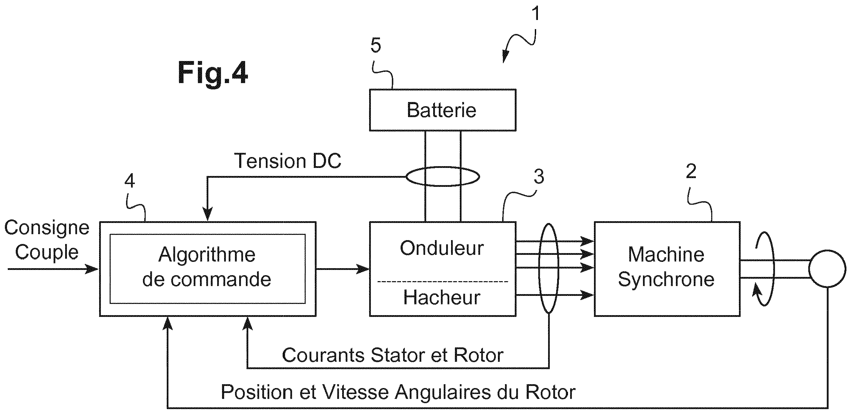

En référence à la figure 4, un système électrique comprend une machine électrique synchrone 2 triphasée, un onduleur triphasé 3 recevant des tensions de commandes statoriques à appliquer au stator, ainsi qu'un convertisseur continu-continu (DC-DC), aussi appelé Hacheur, apte à recevoir une tension de commande rotorique à appliquer au rotor.

L'onduleur triphasé 3 reçoit en entrée une tension continue $V_{DC}$ d'une batterie d'accumulateurs électriques 5 et est commandé par un dispositif de commande 4 mettant en œuvre un procédé de commande de la machine électrique.

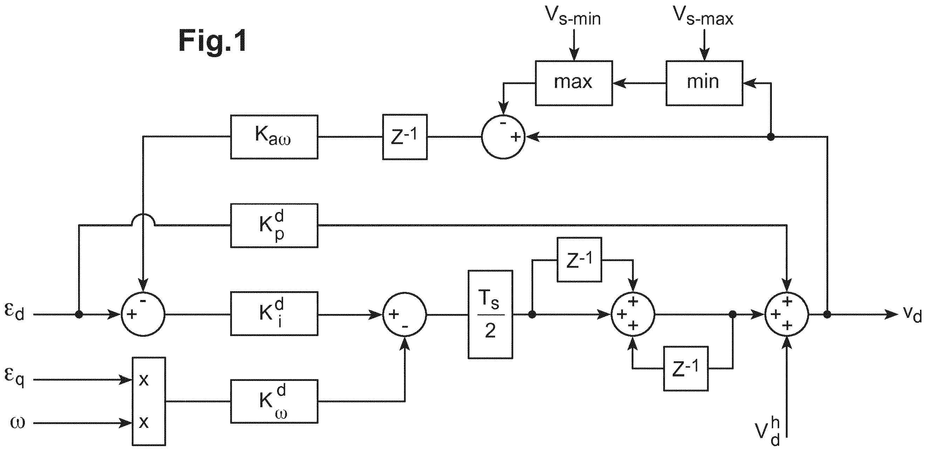

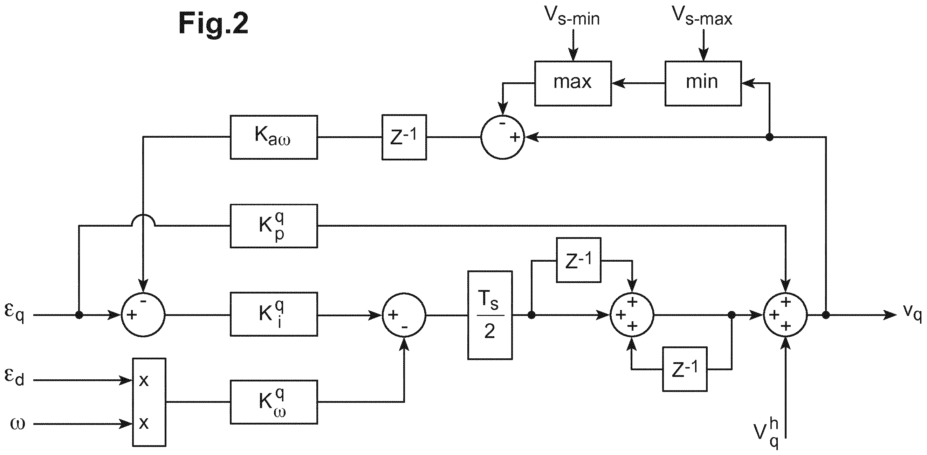

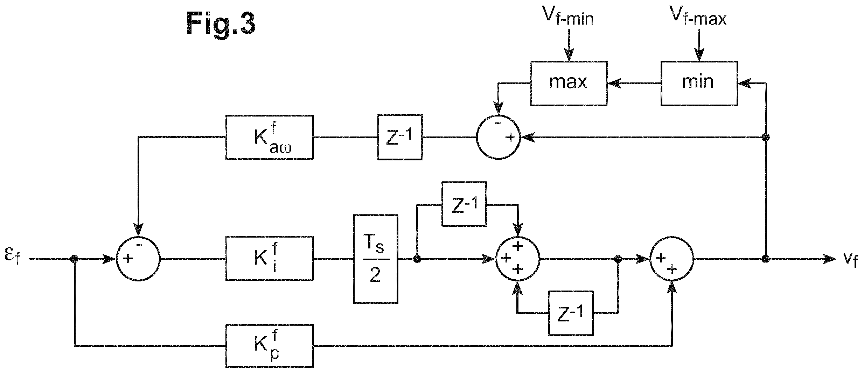

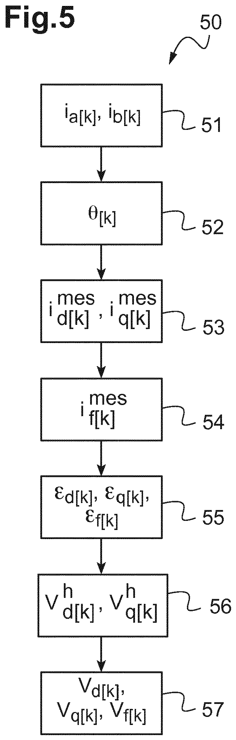

Le procédé de commande selon l'invention, en référence aux figures 1 à 5, a en effet pour objectif de commander l'onduleur 3 de sorte qu'il produise des tensions de commande à appliquer au stator et au rotor (pour le rotor, dans le cas où la machine électrique 2 est à rotor bobiné), de la machine électrique 2.

Le dispositif de commande est donc adapté pour communiquer à l'onduleur des tensions de commande, que l'on souhaite délivrer à la machine électrique 2 ; l'onduleur 3 agissant alors, par commutation de ses interrupteurs de puissance, pour produire les tensions de commande requises à partir de la tension continue $V_{DC}$ de la batterie électrique.

L'onduleur 3 est commandé de manière indépendante de sorte à produire les tensions de commande de la machine électrique à partir de la tension continue $V_{DC}$, tel que requis par le procédé de commande selon l'invention. Aussi, il est connu de l'homme du métier différentes techniques de commande d'un onduleur qui ne font pas l'objet de l'invention, telles que les techniques dites de modulation de largeur d'impulsion, MLI aussi connues sous leur nom anglophone de PWM

Le dispositif de commande 4 est dans ce mode de réalisation de l'invention, un microcontrôleur, ou un microprocesseur. Aussi, le dispositif de commande 4 met en œuvre le procédé selon une fréquence d'horloge propre, et réalise de manière discrète et répétitive les étapes du procédé.

Le dispositif de commande 4 comprend en outre une mémoire vive permettant de mémoriser les résultats des calculs et des mesures du procédé mis en œuvre à des instants précédents k-1, k-2..., de sorte à pouvoir les employer à un instant plus tard k. En effet, le procédé selon l'invention étant de nature récursive, il est nécessaire de pouvoir accéder aux résultats de la mise en œuvre du procédé aux instants précédents.

Le procédé de commande de la machine électrique mis en œuvre par le dispositif de commande 4 comprend une première étape de mesure 51 des courants de la première et la deuxième phase du stator.

Ici, la mesure 51 des courants de phases est réalisée par des organes de mesures, tels que des ampèremètres installés entre l'onduleur 3 et la machine électrique 2, en série dans les deux premières phases.

Le procédé met en œuvre aussi une étape de mesure 52 de la position rotorique, laquelle peut être mesurée 52 par un *resolver*, un codeur optique, un codeur inductif ou tout autre moyen connu de l'homme du métier.

Dans le premier mode de réalisation de l'invention, la machine électrique comprend un rotor bobiné, de sorte qu'on mesure 54 en outre le courant rotorique, d'une manière similaire à la mesure des deux premières phases du stator.

Les courants des deux premières phases du stator, auxquelles on se référera de manière plus simple comme étant les courants statoriques, sont ensuite transformés dans un repère lié au rotor (d,q), aussi appelé repère rotorique.

Pour transformer les courants statoriques mesurés à un instant k, dans un repère rotorique, on met en œuvre dans ce mode de réalisation, une transformée de Park.

Aussi, à partir de la mesure 52 de deux courants statoriques, $i_a$ et $i_b$, et la mesure de l'angle du rotor $\theta$, on calcule 53 les courants $i_d^{mes}$ et $i_q^{mes}$ en utilisant la transformé de Park :

$$i_{d[k]}^{mes} = i_{a[k]} \left( \cos \theta_{[k]} + \frac{1}{\sqrt{3}} \sin \theta_{[k]} \right) + \frac{2}{\sqrt{3}} i_{b[k]} \sin \theta_{[k]} \qquad (1)$$

$$i_{q[k]}^{mes} = i_{a[k]} \left( \frac{1}{\sqrt{3}} \cos \theta_{[k]} - \sin \theta_{[k]} \right) + \frac{2}{\sqrt{3}} i_{b[k]} \cos \theta[k] \qquad (2)$$

- Avec $\left( i_{d[k]}^{mes}, i_{q[k]}^{mes} \right)$ le vecteur de courants statoriques mesurés à l'instant k dans le repère de Park (d,q) lié au rotor ;
- $\theta_{[k]}$ l'angle électrique du rotor à l'instant k ;
- $i_{a[k]}$ et $i_{b[k]}$ les courants statoriques mesurés à l'instant k, des deux premières phases A et B.

Les courants $i_{d[k]}^{mes}$ et $i_{q[k]}^{mes}$ sont ensuite filtrés avec un filtre passe-bas de premier ordre, ayant une bande passante adéquate, classique pour l'homme de métier, afin d'obtenir $i_{d[k]}^{ftr}$ et $i_{q[k]}^{ftr}$ respectivement.

Ensuite on calcule 55 une erreur d'asservissement à un instant k tel que :

$$\varepsilon_{d[k]} = i_{d[k]}^{req} - i_{d[k]}^{ftr} \tag{3}$$

$$\varepsilon_{q[k]} = i_{q[k]}^{req} - i_{q[k]}^{ftr} \tag{4}$$

$$\varepsilon_{f[k]} = i_{f[k]}^{req} - i_{f[k]}^{mes} \tag{5}$$

avec $\varepsilon_{d[k]}$, $\varepsilon_{q[k]}$ les erreurs d'asservissement dans le repère rotorique (d,q) des courants statoriques ; $\varepsilon_{f[k]}$ l'erreur d'asservissement du courant rotorique (noté f), lequel est par nature déjà dans le repère rotorique. $i_{d[k]}^{req}$, $i_{q[k]}^{req}$ et $i_{f[k]}^{req}$ les courants requis pour réaliser le couple de la machine électrique ; et $i_{f[k]}^{mes}$ le courant rotorique mesuré à l'instant k.

Ensuite on calcule 56 les deux tensions de compensation $v_{d[k]}^{h}$, $v_{q[k]}^{h}$, permettant de compenser des harmoniques de courants, d'une manière récursive, avec une initialisation à 0 :

$$v_{d[k]}^{h} = v_{d[k-1]}^{h} + K_{pf}^{d} \varepsilon_{f[k]} + \frac{T_s}{2} K_{if}^{d} \left( \varepsilon_{f[k]} + \varepsilon_{f[k-1]} \right) \tag{6}$$

$$v_{q[k]}^{h} = v_{q[k-1]}^{h} + K_{pf}^{q} \varepsilon_{f[k]} + \frac{T_s}{2} K_{if}^{q} \left( \varepsilon_{f[k]} + \varepsilon_{f[k-1]} \right) \tag{7}$$

Ensuite, on calcule 57 les tensions de commande de manière récursive, avec une initialisation à 0.
Les valeurs de tension de commande sont calculées selon les équations suivantes :

$$v_{d[k]} = v_{d[k-1]} + K_{p}^{d} \varepsilon_{d[k]} + K_{pf}^{d} \varepsilon_{f[k]} + \frac{T_s}{2} \left( V_{d[k]}^{i} + V_{d[k-1]}^{i} \right) + v_{d[k]}^{h} \tag{8}$$

$$v_{q[k]} = v_{q[k-1]} + K_{p}^{q} \varepsilon_{q[k]} + K_{pf}^{q} \varepsilon_{f[k]} + \frac{T_s}{2} \left( V_{q[k]}^{i} + V_{q[k-1]}^{i} \right) + v_{q[k]}^{h} \tag{9}$$

$$v_{f[k]} = v_{f[k-1]} + K_{p}^{f} \varepsilon_{f[k]} + K_{i}^{f} \frac{T_s}{2} \left( \varepsilon_{f[k]} + \varepsilon_{f[k-1]} - K_{aw} \left( \delta v_{f[k-1]} + \delta v_{f[k-2]} \right) \right) \tag{10}$$

avec

$$V_{d[k]}^{i} = K_{i}^{d} \left( \varepsilon_{d[k]} - K_{aw} \delta v_{d[k-1]} \right) - \omega_{[k]} K_{\omega}^{d} \varepsilon_{q[k]} + K_{if}^{d} \varepsilon_{f[k]} \tag{11}$$

$$V_{q[k]}^{i} = K_{i}^{q} \left( \varepsilon_{q[k]} - K_{aw} \delta v_{q[k-1]} \right) + \omega_{[k]} K_{\omega}^{q} \varepsilon_{d[k]} + K_{if}^{q} \varepsilon_{f[k]} \tag{12}$$

$$\delta v_{d[k]} = v_{d[k]} - \max \left\{ \min \left\{ v_{d[k]}, \frac{V_{DC}}{\sqrt{3}} \right\}, -\frac{V_{DC}}{\sqrt{3}} \right\} \tag{13}$$

$$\delta v_{q[k]} = v_{q[k]} - \max\left\{min\left\{v_{q[k]}, \frac{V_{DC}}{\sqrt{3}}\right\}, -\frac{V_{DC}}{\sqrt{3}}\right\} \tag{14}$$

$$\delta v_{f[k]} = v_{f[k]} - \max\left\{min\left\{v_{f[k]}, V_{DC}\right\}, -V_{DC}\right\} \tag{15}$$

dans lesquelles :

$T_s$ est la période de rafraîchissement de la commande.
$V_{DC}$ la tension de la batterie d'accumulateurs électriques $\omega[k]$ la vitesse électrique angulaire du rotor en rad/sec à l'instant k.

Et $K_p^d, K_p^q, K_p^f, K_i^d, K_i^q, K_i^f, K_\omega^d, K_\omega^q, K_{aw}, K_{aw}^f, K_{pf}^d, K_{pf}^q, K_{if}^d, K_{if}^q$ des constantes de paramétrage du système de commande que l'homme du métier sait déterminer. Les tensions de commande $v_d$, $v_q$ calculées dans le repère rotorique sont bien sûr ramenées dans le système triphasé lié au stator avant d'être envoyées comme consignes à l'onduleur et appliquées à la machine électrique.
Selon un deuxième mode de réalisation non revendiqué, la machine électrique est une machine électrique synchrone à aimants permanents (MSAP). Aussi, cette machine ne comprend pas de courant rotorique.
L'invention telle que décrite dans le premier mode de réalisation peut être appliquée pour cette machine, en supprimant simplement les calculs relatifs aux courants rotoriques, à savoir les équations (5), (6), (7), (10) et (15).

## Revendications

1. Procédé de commande (50) d'une machine électrique triphasée synchrone comprenant un stator et un rotor, ledit procédé (50) comportant :

    - la mesure (51) des courants ($i_{a[k]}$, $i_{b[k]}$) de la première et deuxième phase dudit stator ;
    - la mesure (52) d'une position angulaire ($\theta_{[k]}$) du rotor ;
    - le calcul (53) desdits courants mesurés $\left(i_{d[k]}^{mes}, i_{q[k]}^{mes}\right)$ dans un repère rotorique (d, q); ledit procédé étant **caractérisé en ce qu'**il comporte :
    - le calcul (55) d'erreurs d'asservissement ($\varepsilon_{d[k]}$, $\varepsilon_{q[k]}$, $\varepsilon_{f[k]}$) sur les courants statoriques et rotoriques, les erreurs d'asservissement statoriques étant calculées comme les différences entre les courants statoriques requis et les courants statoriques mesurés puis filtrés par un filtre passe-bas, l'erreur d'asservissement rotorique étant calculée comme la différence entre le courant rotorique requis et le courant rotorique mesuré;
    - le calcul (56) récursif de tensions de compensation des harmoniques de courants en fonction de ladite erreur d'asservissement rotorique ;
    - le calcul (57) de tensions de commande ($v_{d[k]}$, $v_{q[k]}$, $v_{f[k]}$) de la machine électrique ; et
    - l'application desdites tensions de commande ($v_{d[k]}$, $v_{q[k]}$, $v_{f[k]}$) à ladite machine électrique ;

    ledit calcul (57) de tensions de commande ($v_{d[k]}$, $v_{q[k]}$, $v_{f[k]}$) étant réalisé dans ledit repère rotorique (d,q), de manière récursive et en fonction d'une valeur de période de mise à jour de la commande ($T_s$), d'une valeur de tension continue ($V_{DC}$), des erreurs d'asservissement et de la vitesse électrique angulaire du rotor ($\omega[k]$).

2. Procédé (50) selon la revendication 1, **caractérisé en ce que** lesdits courants mesurés sont calculés dans le repère rotorique (d,q) par une transformée de Park.

3. Procédé (50) de commande, selon la revendication 1 ou 2, pour une machine électrique à rotor bobiné, **caractérisé en ce qu'**il comporte une étape (54) de mesure du courant rotorique $\left(i_{f[k]}^{mes}\right)$ ; le calcul des tensions de commande ($v_{d[k]}$, $v_{q[k]}$, $v_{f[k]}$) comprenant le calcul d'une tension à appliquer au rotor bobiné ($vf_{[k]}$).

4. Procédé (50) selon l'une quelconque des revendications 1 à 3, **caractérisé en ce que** ladite étape de calcul (57) de tensions de commande comprend une initialisation à 0 pour la récursivité.

**5.** Dispositif de commande (4) d'une machine électrique triphasée synchrone (2) comprenant un stator et un rotor, ledit dispositif (4) comportant :

- un organe de mesure des courants de la première et deuxième phase dudit stator ;
- un organe de mesure d'une position angulaire du rotor ;
- un organe de mesure du courant rotorique ;
- des moyens pour calculer lesdits courants mesurés dans un repère rotorique; le dispositif étant **caractérisé en ce qu'**il comporte :
- des moyens pour calculer des erreurs d'asservissement sur les courants statoriques et rotoriques, les erreurs d'asservissement statoriques étant calculées comme les différences entre les courants statoriques requis et les courants statoriques mesurés puis filtrés par un filtre passe-bas, l'erreur d'asservissement rotorique étant calculée comme la différence entre le courant rotorique requis et le courant rotorique mesuré;
- des moyens de calcul récursif de tensions de compensation des harmoniques de courants en fonction de l'erreur d'asservissement rotorique ;
- des moyens de calcul des tensions de commande de la machine électrique ; et
- des moyens pour appliquer lesdites tensions de commande à ladite machine électrique ; les moyens de calcul des tensions de commande étant adaptés pour réaliser ledit calcul dans ledit repère rotorique, de manière récursive et en fonction d'une valeur de période de mise à jour de la commande, d'une valeur de tension continue, des erreurs d'asservissement et de la vitesse électrique angulaire du rotor.

**6.** Système électrique (1) comprenant une machine électrique synchrone (2) comprenant un stator et un rotor bobiné, une batterie d'accumulateurs électriques (5) pour alimenter ladite machine électrique (2) un onduleur triphasé (3) apte à transformer la tension continue ($V_{DC}$) de la batterie d'accumulateurs électriques (5) en des tensions de commande triphasées pour commander la machine électrique synchrone (2), et un dispositif de commande (4) selon la revendication 5.

**7.** Véhicule automobile comprenant un système électrique selon la revendication 6.

**Patentansprüche**

**1.** Steuerverfahren (50) einer elektrischen Drehstrom-Synchronmaschine, die einen Stator und einen Rotor enthält, wobei das Verfahren (50) aufweist:

- die Messung (51) der Ströme ($i_{a[k]}$, $i_{b[k]}$) der ersten und zweiten Phase des Stators;
- die Messung (52) einer Winkelstellung ($\theta_{[k]}$) des Rotors;
- die Berechnung (53) der gemessenen Ströme $\left(i_{d[k]}^{mes}, i_{q[k]}^{mes}\right)$ in einem Rotorkoordinatensystem (d, q);

wobei das Verfahren **dadurch gekennzeichnet ist, dass** es aufweist:

- die Berechnung (55) von Regelungsfehlern ($\varepsilon_{d[k]}$, $\varepsilon_{q[k]}$, $\varepsilon_{f[k]}$) bei den Stator- und Rotorströmen, wobei die Stator-Regelungsfehler als die Differenzen zwischen den erforderlichen Statorströmen und den gemessenen und dann durch ein Tiefpassfilter gefilterten Statorströmen berechnet werden, der Rotor-Regelungsfehler als die Differenz zwischen dem erforderlichen Rotorstrom und dem gemessenen Rotorstrom berechnet wird;
- die rekursive Berechnung (56) von Kompensationsspannungen der Stromoberschwingungen abhängig vom Rotor-Regelungsfehler;
- die Berechnung (57) von Steuerspannungen ($v_{d[k]}$, $v_{q[k]}$, $v_{f[k]}$) der elektrischen Maschine; und
- das Anlegen der Steuerspannungen ($v_{d[k]}$, $v_{q[k]}$, $v_{f[k]}$) an die elektrische Maschine;

wobei die Berechnung (57) von Steuerspannungen ($v_{d[k]}$, $v_{q[k]}$, $v_{f[k]}$) im Rotorkoordinatensystem (d,q) rekursiv und abhängig von einem Wert einer Aktualisierungsperiode der Steuerung ($T_s$), einem Gleichspannungswert ($V_{DC}$), den Regelungsfehlern und der elektrischen Winkelgeschwindigkeit des Rotors ($\omega\,[k]$) durchgeführt wird.

**2.** Verfahren (50) nach Anspruch 1, **dadurch gekennzeichnet, dass** die gemessenen Ströme im Rotorkoordinatensystem (d,q) durch eine Park-Transformation berechnet werden.

**3.** Steuerverfahren (50) nach Anspruch 1 oder 2 für eine elektrische Maschine mit gewickeltem Rotor, **dadurch ge-**

**kennzeichnet, dass** es einen Schritt (54) der Messung des Rotorstroms $\left(i_{f[k]}^{mes}\right)$ aufweist; wobei die Berechnung der Steuerspannungen ($v_{d[k]}$, $v_{g[k]}$, $v_{f[k]}$) die Berechnung einer an den gewickelten Rotor anzulegenden Spannung ($v_{f[k]}$) enthält.

4. Verfahren (50) nach einem der Ansprüche 1 bis 3, **dadurch gekennzeichnet, dass** der Schritt (57) der Berechnung von Steuerspannungen eine Nullrücksetzung für die Rekursion enthält.

5. Steuervorrichtung (4) einer elektrischen Drehstrom-Synchronmaschine (2), die einen Stator und einen Rotor enthält, wobei die Vorrichtung (4) aufweist:

   - ein Element zur Messung der Ströme der ersten und zweiten Phase des Stators;
   - ein Element zur Messung einer Winkelstellung des Rotors;
   - ein Element zur Messung des Rotorstroms;
   - Einrichtungen zur Berechnung der gemessenen Ströme in einem Rotorkoordinatensystem;

   wobei die Vorrichtung **dadurch gekennzeichnet ist, dass** sie aufweist:

   - Einrichtungen zur Berechnung von Regelungsfehlern bei den Stator- und Rotorströmen, wobei die Stator-Regelungsfehler als die Differenzen zwischen den erforderlichen Statorströmen und den gemessenen und dann durch ein Tiefpassfilter gefilterten Statorströmen berechnet werden, der Rotor-Regelungsfehler als die Differenz zwischen dem erforderlichen Rotorstrom und dem gemessenen Rotorstrom berechnet wird;
   - Einrichtungen zur rekursiven Berechnung von Kompensationsspannungen der Stromüberschwingungen abhängig vom Rotor-Regelungsfehler;
   - Einrichtungen zur Berechnung der Steuerspannungen der elektrischen Maschine; und
   - Einrichtungen zum Anlegen der Steuerspannungen an die elektrische Maschine; wobei die Einrichtungen zur Berechnung der Steuerspannungen geeignet sind, die Berechnung im Rotor-Koordinatensystem rekursiv und abhängig von einem Wert einer Aktualisierungsperiode der Steuerung, einem Gleichspannungswert, den Regelungsfehlern und der elektrischen Winkelgeschwindigkeit des Rotors durchzuführen.

6. Elektrisches System (1), das eine elektrische Synchronmaschine (2) enthält, die einen Stator und einen gewickelten Rotor, eine elektrische Speicherbatterie (5) zur Versorgung der elektrischen Maschine (2), einen Dreiphasen-Wechselrichter (3), der fähig ist, die Gleichspannung ($V_{DC}$) der elektrischen Speicherbatterie (5) in Dreiphasen-Steuerspannungen umzuwandeln, um die elektrische Synchronmaschine (2) zu steuern, und eine Steuervorrichtung (4) nach Anspruch 5 enthält.

7. Kraftfahrzeug, das ein elektrisches System nach Anspruch 6 enthält.

**Claims**

1. Method for controlling (50) a synchronous three-phase electric machine comprising a stator and a rotor, said method (50) comprising:

   - measuring (51) currents ($i_{a[k]}$, $i_{b[k]}$) of the first and second phases of said stator;
   - measuring (52) an angular position ($\theta_{[k]}$) of the rotor;
   - calculating (53) said currents $\left(i_{d[k]}^{mes}, i_{q[k]}^{mes}\right)$ measured in a rotor reference frame (d, q); said method being **characterized in that** it comprises:
   - calculating (55) automatic control errors ($\varepsilon_{d[k]}$, $\varepsilon_{q[k]}$, $\varepsilon_{f[k]}$) in the stator and rotor currents, the stator automatic control errors being calculated as the differences between the desired stator currents and the stator currents measured and then filtered by a low-pass filter, the rotor automatic control error being calculated as the difference between the desired rotor current and the measured rotor current;
   - recursively calculating (56) compensating voltages for current harmonics as a function of said rotor automatic control error;
   - calculating (57) control voltages ($v_{d[k]}$, $v_{q[k]}$, $v_{f[k]}$) for the electric machine; and
   - applying said control voltages ($v_{d[k]}$, $v_{q[k]}$, $v_{f[k]}$) to said electric machine;

said calculation (57) of control voltages ($v_{d[k]}$, $v_{q[k]}$, $v_{f[k]}$) being executed in said rotor reference frame (d, q), in a recursive manner and as a function of a period value for the updating of control ($T_s$), a value for the DC voltage ($V_{DC}$), automatic control errors and the electrical angular speed of the rotor ($\omega[k]$).

2. Method (50) according to Claim 1, **characterized in that** said measured currents are calculated in the rotor reference frame (d, q) by means of a Park transformation.

3. Control method (50), according to Claim 1 or 2, for a wound rotor electric machine, **characterized in that** it comprises a step (54) for the measurement of the rotor current $\left(i_{f[k]}^{mes}\right)$ ; and the calculation of control voltages ($v_{d[k]}$, $v_{q[k]}$, $v_{f[k]}$) which incorporates the calculation of a voltage to be applied to the wound rotor ($v_{f[k]}$).

4. Method (50) according to any one of Claims 1 to 3, **characterized in that** said step for the calculation (57) of control voltages comprises initialization at 0 for the purposes of recursion.

5. Control device (4) for a synchronous three-phase electric machine (2) comprising a stator and a rotor, said device (4) comprising:

- a component for measuring currents of the first and second phases of said stator;
- a component for measuring an angular position of the rotor;
- a component for measuring the rotor current;
- means for calculating said currents measured in a rotor reference frame;

the device being **characterized in that** it comprises:

- means for calculating automatic control errors in the stator and rotor currents, the stator automatic control errors being calculated as the differences between the desired stator currents and the stator currents measured and then filtered by a low-pass filter, the rotor automatic control error being calculated as the difference between the desired rotor current and the measured rotor current;
- means for recursively calculating compensating voltages for current harmonics as a function of the rotor automatic control error;
- means for calculating control voltages for the electric machine; and
- means for applying said control voltages to said electric machine; the means for calculating control voltages being suitable for the execution of said calculation in said rotor reference frame, in a recursive manner and as a function of a period value for the updating of control, a value for the DC voltage, automatic control errors and the electrical angular speed of the rotor.

6. Electrical system (1) comprising a synchronous electric machine (2) having a stator and a wound rotor, an electrical accumulator battery (5) for the supplying of said electric machine (2) with power, a three-phase inverter (3) which is capable of transforming the DC voltage ($V_{DC}$) of the electrical accumulator battery (5) into three-phase control voltages for controlling the synchronous electric machine (2), and a control device (4) according to Claim 5.

7. Motor vehicle comprising an electrical system according to Claim 6.

Fig.1

$V_{s-max}$  min

$V_{s-min}$  max

$Z^{-1}$

$K_{a\omega}$

$K_p^d$

$K_i^d$

$K_\omega^d$

$\dfrac{T_s}{2}$

$Z^{-1}$

$Z^{-1}$

$v_d$

$v_d^h$

$\varepsilon_d$

$\varepsilon_q$

$\omega$

Fig.2

Fig.3

**Fig.4**

Batterie — 5

1

Tension DC

Consigne Couple

4 — Algorithme de commande

3 — Onduleur
--------
Hacheur

2 — Machine Synchrone

Courants Stator et Rotor

Position et Vitesse Angulaires du Rotor

EP 3 711 155 B1

# Fig.5

50

$$i_{a[k]}, i_{b[k]}$$ — 51

$$\theta_{[k]}$$ — 52

$$i_{d[k]}^{mes}, i_{q[k]}^{mes}$$ — 53

$$i_{f[k]}^{mes}$$ — 54

$$\varepsilon_{d[k]}, \varepsilon_{q[k]}, \varepsilon_{f[k]}$$ — 55

$$V_{d[k]}^{h}, V_{q[k]}^{h}$$ — 56

$$V_{d[k]}, V_{q[k]}, V_{f[k]}$$ — 57

## RÉFÉRENCES CITÉES DANS LA DESCRIPTION

**Documents brevets cités dans la description**

- FR 3012270
- EP 1843462 A1
- EP 1276225 A2
- EP 1906523 A1